# EUROPEAN PATENT APPLICATION

(11) **EP 4 618 188 A1**
(43) Date of publication of application: **17.09.2025**
(21) Application number: 24898191.2
(22) Date of filing: 29.11.2024
(51) Int. Cl.: H01M 4/36, H01M 4/525, H01M 4/505, H01M 4/62, H01M 4/131, H01M 4/1391, H01M 10/052, C01G 53/00, H01M 4/02

(54) **POSITIVE ELECTRODE ACTIVE MATERIAL FOR SECONDARY BATTERY, POSITIVE ELECTRODE COMPRISING SAME, SECONDARY BATTERY, AND METHOD FOR MANUFACTURING SAME**

(30) Priority: 30.11.2023 KR 20230170747
(71) Applicant: LG Energy Solution, Ltd., Seoul 07335 (KR)
(72) Inventor: KIM, Myeongsoo, Daejeon 34122 (KR); KWON, Hyejin, Daejeon 34122 (KR); LEE, Choonghyeon, Daejeon 34122 (KR); CHOI, Seokin, Daejeon 34122 (KR); OH, Kyungbae, Daejeon 34122 (KR); KANG, Sora, Daejeon 34122 (KR)
(74) Representative: Goddar, Heinz J.
(86) International application number: PCT/KR2024/019248
(87) International publication number: WO 2025/116597

(57) **Abstract**

The present disclosure relates to a positive electrode active material for a secondary battery, a positive electrode comprising the same, a secondary battery, and a method of manufacturing the same, and more particularly to a positive electrode active material comprising a core and a lithium oxide-containing coating layer comprising nitrogen.

## Description

### [Technical Field]

### Cross-citation with Related Applications

This application claims the benefit of priority to Korean Patent Application No. 10-2023-0170747, filed November 30, 2023, and Korean Patent Application No. 10-2024-0174355, filed November 29, 2024.

### Technical Field

The present disclosure relates to a positive electrode active material for a secondary battery, a positive electrode comprising the same, a secondary battery, and a method of manufacturing the same, and more particularly to a positive electrode active material comprising a core and a lithium oxide-containing coating layer comprising nitrogen.

### [Related Art]

A lithium all-solid-state battery is a battery that uses a sulfide, oxide, or polymer-based solid electrolyte and is capable of directly interconverting chemical energy into electrical energy by oxidizing or reducing lithium ions through an all-solid-state material as a medium. In particular, the benefits of eco-friendliness, safety, and high energy density storage capacity are driving demand as a sustainable secondary battery, as it can solve the limitations of currently commercialized lithium secondary batteries, which are low energy density, high cost, and toxicity.

However, all-solid-state batteries are facing problems such as irreversibility due to interfacial side reactions between the solid electrolytes directly contacting with the positive electrode active material during charge and discharge reactions, and uneven distribution of electrode charge due to interfacial resistance and space-charge layer formation, which degrades the capacity of the battery.

In order to solve these problems, technologies have been developed wherein a positive electrode active material is surface treated with metal oxides and applied to all-solid-state batteries, but the metal oxides are used alone or mixed with other materials, and research on the metal oxides themselves is still needed.

### [Prior Art Reference]

### [Patent Reference]

(Patent Reference 1) Japanese Patent No. 5673323 (January 9, 2015)

### [Detailed Description of the Invention]

### [Technical Problem]

Accordingly, it is an object of the present disclosure to provide a positive electrode active material for a secondary battery by forming a metal oxide coating layer containing nitrogen as a coating layer on the surface of the positive electrode active material, thereby improving the resistance and life of the battery.

### [Technical Solution]

To resolve the issues described above, one example of the present disclosure provides a positive electrode active material for a secondary battery comprising a core containing a lithium metal oxide and a coating layer formed on a surface of the core and containing an oxide represented by Formula 1 below, wherein the coating layer comprises nitrogen.

[Formula 1] LiₐM¹_{b}O_{c}

wherein 0<a≤4, 0<b≤5, and 0<c≤12, and
M¹ is at least one selected from B, Al, Zr, P, Ti, Nb and W.

In one example of the present disclosure, a positive electrode active material for a secondary battery is provided, wherein in the oxide represented by Formula 1, M is Ti.

In one example of the present disclosure, there is provided a positive electrode active material for a secondary battery, wherein the nitrogen is derived from nitrogen oxide or nitrogen ion-containing aqueous solution.

In one example of the present disclosure, there is provided a positive electrode active material for a secondary battery, wherein the nitrogen is included at least one form selected from NO₂⁻, NO₃⁻, N₂O, N₂O₃, N₂O₄, N₂O₅, N₃O₇ and NH₄OH.

In one example of the present disclosure, there is provided a positive electrode active material for a secondary battery, wherein the ratio (N_{N}/N_{Ti}) of the molar number of the nitrogen element (N_{N}) to the molar number of the Ti element (N_{Ti}) in the coating layer of 0.5 to 2.0.

In one example of the present disclosure, there is provided a positive electrode active material for a secondary battery, wherein the ratio (N_{N}/N_{Ti}) of the molar number of the nitrogen element (N_{N}) to the molar number of the Ti element (N_{Ti}) in the coating layer of 0.6 to 1.0.

In one example of the present disclosure, there is provided a positive electrode active material for a secondary battery, wherein the coating layer is present in an amount of 0.1% by weight to 5.0% by weight based on the total weight of the positive electrode active material.

In one example of the present disclosure, there is provided a positive electrode active material for a secondary battery, wherein the lithium metal oxide is represented by Formula 2 below.

[Formula 2] Liₓ[Ni_{y}Co_{z}Mn_{w}M²ᵥ]O₂

wherein M² is at least one element selected from W, Cu, Fe, V, Cr, Ti, Zr, Zn, Al, In, Ta, Y, La, Sr, Ga, Sc, Gd, Sm, Ca, Ce, Nb, Mg, B and Mo,
x, y, z, w, and v are 1.0≤x≤1.30, 0.1≤y<1, 0≤z≤1, 0≤w≤1, and 0≤v≤0.1, respectively, and y+z+w+v=1.

In one example of the present disclosure, there is provided a positive electrode for a secondary battery comprising a positive electrode active material for a secondary battery, a solid electrolyte, a conductive material, and a binder.

In one example of the present disclosure, a method for manufacturing a positive electrode for a secondary battery is provided, comprising (S1) adding a solution containing positive electrode active material particles to a titanium precursor solution to produce a first mixed solution, (S2) adding a lithium source solution comprising nitrogen to the first mixed solution to produce a second mixed solution, and (S3) heat treating the second mixed solution to produce a positive electrode active material with a coating layer.

In one example of the present disclosure, a method for manufacturing a positive electrode for a secondary battery is provided, wherein in step (S3), a heat treatment temperature is 400°C or less.

In one example of the present disclosure, a method for manufacturing a positive electrode for a secondary battery is provided, wherein in step (S3), the coating layer comprises nitrogen.

In one example of the present disclosure, the present disclosure provides an all-solid-state lithium secondary battery comprising the positive electrode; a negative electrode; and a solid electrolyte disposed between the positive electrode and negative electrode.

### [Advantageous Effects]

The positive electrode active material for a secondary battery according to the present disclosure has the advantage that by forming a metal oxide coating layer containing nitrogen on its surface, the reaction occurring between the positive electrode active material and the solid electrolyte is suppressed, thereby reducing the interfacial resistance, and at the same time, the increase in electrode resistance due to charging and discharging is suppressed, thereby improving the life of the battery comprising the positive electrode active material.

### [Best Mode]

The present disclosure is subject to various modifications and may have many examples, certain examples of which will be described in detail in the following description.

However, this is not intended to limit the invention to any particular example, and is to be understood to include all modifications, equivalents, or substitutions that fall within the scope of the idea and skill of the present invention.

In the present disclosure, the terms "comprising" and "having" are intended to designate the presence of the features, numbers, steps, actions, components, parts, or combinations thereof described in the specification, and are not to be understood as precluding the possibility of the presence or addition of one or more other features, numbers, steps, actions, components, parts, or combinations thereof.

Also, when a layer, film, region, plate, or the like is referred to herein as being "on" another, this includes not only when it is "directly on" another, but also when there is another part therebetween. Conversely, when a layer, film, region, plate, or the like is referred to herein as being "below" another, this includes not only when it is "directly below" another, but also when there is another part therebetween. Furthermore, as used herein, being disposed "on" something may include being disposed below something.

The present disclosure will now be described in more detail.

### Positive Electrode Active Material for Secondary Battery

In one example of the present disclosure, a positive electrode active material for a secondary battery comprises a core containing a lithium metal oxide and a coating layer formed on a surface of the core and containing an oxide represented by Formula 1 below, wherein the coating layer comprises nitrogen.

[Formula 1] LiₐM¹_{b}O_{c}

wherein 0<a≤4, 0<b≤5, and 0<c≤12, and
M¹ is at least one selected from B, Al, Zr, P, Ti, Nb and W.

In one example of the present disclosure, the secondary battery may be an all-solid-state battery.

In one example of the present disclosure, the all-solid-state battery may be a sulfide-based all-solid-state battery.

The lithium metal oxide contained in the core may be used without limitation as long as it is a lithium metal oxide that reacts reversibly to provide lithium ions upon charging and discharging of the battery, but more particularly it may contain a lithium metal oxide represented by Formula 2 below.

[Formula 2] Liₓ[Ni_{y}Co_{z}Mn_{w}M²ᵥ]O₂

wherein M² is at least one element selected from W, Cu, Fe, V, Cr, Ti, Zr, Zn, Al, In, Ta, Y, La, Sr, Ga, Sc, Gd, Sm, Ca, Ce, Nb, Mg, B and Mo,
x, y, z, w, and v are 1.0≤x≤1.30, 0.1≤y<1, 0≤z≤1, 0≤w≤1, and 0≤v≤0.1, respectively, and y+z+w+v=1.

The lithium metal oxide represented by Formula 2 above is an oxide containing a transition metal together with lithium, which may comprise a high content of nickel among the transition metal. In one example, the lithium metal oxide may comprise at least one selected from LiNi_{0.9}Co_{0.05}Mn_{0.05}O₂, LiNi_{0.8}Co_{0.1}Mn_{0.1}O₂, LiNi_{0.7}Co_{0.15}Mn_{0.15}O₂, LiNi_{0.6}Co_{0.2}Mn_{0.2}O₂, LiNi_{0.6}Co_{0.2}Mn_{0.1}Al_{0.1}O₂, LiNi_{0.7}C0_{0.1}Mn_{0.1}Al_{0.1}O₂, and LiNi_{0.8}Co_{0.1}Mn_{0.05}Al_{0.05}O₂, but is not limited thereto. The lithium metal oxide contains a high content of nickel, which has a good effect on improving the charge and discharge capacity of the battery.

The positive electrode active material for a secondary battery according to the present disclosure may comprise a coating layer formed on the surface of the core and containing an oxide represented by the following formula 1.

[Formula 1] LiₐM¹_{b}O_{c}

wherein 0<a≤4, 0<b≤5, and 0<c≤12, and
M¹ is at least one selected from B, Al, Zr, P, Ti, Nb and W.

The oxide represented by Formula 1 is an oxide containing a transition metal (M¹) together with lithium, which may comprise, in particular, Ti among the transition metals. In one example, the oxide represented by Formula 1 may be lithium titanium oxide (LTO), and may be at least one selected from Li₄Ti₅O₁₂, LiTi₂O₄, Li₂TiO₃ and Li₂Ti₃O₇, preferably Li₄Ti₅O₁₂. Lithium titanium oxide as described above has stable lifetime characteristics and safety, and can be preferably used.

The positive electrode active material for a secondary battery according to the present disclosure may comprise a coating layer comprising nitrogen. That is, the positive electrode active material for a secondary battery according to the present invention may comprise a lithium titanium coating layer comprising nitrogen.

The nitrogen may be derived from nitrogen oxide or nitrogen ion-containing aqueous solution. The nitrogen may be at least one form selected from NO₂⁻, NO₃⁻, N₂O, N₂O₃, N₂O₄, N₂O₅, N₃O₇ and NH₄OH.

In the process of coating the surface of the core of the positive electrode active material with a coating layer, a high temperature heat treatment is required when synthesizing the lithium source and titanium source by the sol-gel method by the liquid method, i.e., the wet method. However, this was uneconomical and inefficient, requiring heat treatments of at least 400°C during the manufacturing process.

Therefore, the inventor of the present disclosure has completed the present disclosure as a way to improve the lifetime characteristics of the battery by easing the process conditions and improving the ionic conductivity.

In other words, by including nitrogen element in the lithium ion source, the heat treatment temperature during the manufacturing process is significantly reduced to 200°C or less, which improves the economic and operational efficiency, and the ionic conductivity of the positive electrode active material coated with the coating layer is also significantly better than that of the positive electrode active material containing a conventional lithium ion source.

The nitrogen element remains detectable even after heat treatment following its coating onto the core surface.

In one example of the present disclosure, when the positive electrode active material for a secondary battery comprises a lithium titanium oxide coating layer comprising nitrogen, the ratio (N_{N} /N_{Ti}) of the molar number of nitrogen element (N_{N}) to the molar number of titanium (Ti) elements (N_{Ti}) in the coating layer may be 0.5 to 2.0. More specifically, the positive electrode active material for a secondary battery may have a value of N_{N} /N_{Ti} in the coating layer of 0.5 or more, 0.55 or more, 0.6 or more, 0.65 or more, 2.0 or less, 1.8 or less, 1.6 or less, 1.4 or less, 1.2 or less, or 1.0 or less.

If the ratio (N_{N} /N_{Ti}) of the molar number of nitrogen element (N_{N}) to the molar number of titanium (Ti) elements (N_{Ti}) in the coating layer is less than 0.5, the content of the lithium titanium oxide in the coating layer is relatively large compared to the content of the nitrogen element, and the heat treatment temperature required to form the coating layer in the positive electrode manufacturing process is further increased, resulting in a problem of decreased economic and operational efficiency. Furthermore, if the ratio (N_{N} /N_{Ti}) of the molar number of nitrogen element (N_{N}) to the molar number of titanium (Ti) elements (N_{Ti}) in the coating layer is greater than 2.0, the content of nitrogen in the coating layer becomes relatively more than the content of titanium, causing the generation of impurities of the excessively supplied nitrogen compound, thereby reducing the ionic conductivity of the positive electrode active material.

In one example of the present disclosure, the content of the coating layer may be 0.1% by weight to 5.0% by weight based on the total weight of the positive electrode active material. More specifically, the content of the coating layer may be 0.1% by weight or more, 0.5% by weight or more, 1.0% by weight or more, 1.5% by weight or more, 2.0% by weight or more, 2.5% by weight or more, 3.0% by weight or more, 5.0% by weight or less, 4.5% by weight or less, 4.0% by weight or less, 3.5% by weight or less, based on the total weight of the positive electrode active material.

### Positive Electrode for Secondary Battery

The lithium secondary battery according to the present disclosure, including the positive electrode active material of the present invention described above, can exhibit excellent battery performance by suppressing side reactions occurring at the interface of the positive electrode active material and the solid electrolyte, and reducing resistance in the positive electrode.

In this case, the positive electrode may have a structure in which a positive electrode composite layer containing the positive electrode active material of the present invention described above is formed on the positive electrode current collector.

The positive electrode current collector is not particularly limited as long as it is conductive without causing chemical changes in the battery, for example, stainless steel, aluminum, nickel, titanium, calcined carbon, aluminum or stainless steel whose surface is treated with carbon, nickel, titan or silver can be used.

Furthermore, the positive electrode composite layer may comprise a positive electrode active material, a solid electrolyte, a conductive material and a binder, and in some cases further comprise additives.

The solid electrolyte may comprise at least one selected from the group consisting of a sulfide-based solid electrolyte, a polymer-based solid electrolyte, and an oxide-based solid electrolyte, and preferably a sulfide-based solid electrolyte. The solid electrolyte may be in the form of particles.

The sulfide-based solid electrolyte contains sulfur (S) and exhibits ionic conductivity of a metal belonging to Group 1 or 2 of the periodic table, and it may include a Li-P-S-based glass or a Li-P-S-based glass-ceramic.

Specifically, the sulfide-based solid electrolyte may include at least one selected from the group consisting of Li₆PS₅Cl, Li₆PS₅Br, Li₆PS₅I, Li₂S-P₂S₅, Li₂S-LiI-P₂S₅, Li₂S-LiI-Li₂O-P₂S₅, Li₂S-LiBr-P₂S₅, Li₂S-Li₂O-P₂S₅, Li₂S-Li₃PO₄-P₂S₅, Li₂S-P₂S₅-P₂S₅, Li₂S-P₂S₅-SiS₂, Li₂S-P₂S₅-SnS, Li₂S-P₂S₅-Al₂S₃, Li₂S-GeS₂ and Li₂S-GeS₂-ZnS, and preferably include at least one selected from the group consisting of Li₆PS₅Cl, Li₆PS₅Br and Li₆PS₅I. The Li₆PS₅Cl, Li₆PS₅Br and Li₆PS₅I may be argyrodite-type solid electrolytes. Furthermore, the sulfide-based solid electrolyte may be doped with trace elements, for example, Li₆PS₅Cl additionally doped with bromine (Br).

The polymer-based solid electrolyte is a composite of a lithium salt and a polymeric resin, that is, a polymeric electrolyte material in the form formed by the addition of a polymeric resin to a solvated lithium salt, and may exhibit an ionic conductivity of about 1x10⁻⁷ S/cm or more, preferably about 1x10⁻⁵ S/cm or more.

Non-limiting examples of the polymeric resin include polyether-based polymers, polycarbonate-based polymers, acrylate-based polymers, polysiloxane-based polymers, phosphazene-based polymers, polyethylene derivatives, alkylene oxide derivatives such as polyethylene oxide, phosphate ester polymers, poly agitation lysines, polyester sulfides, polyvinyl alcohols, polyvinylidene fluorides, and polymers comprising ionic dissociating groups, and may include one or more thereof. Furthermore, the polymeric electrolyte may be a polymeric resin, for example, a branched copolymer, a comb-like polymer, and a cross-linked polymeric resin copolymerized with an amorphous polymer such as PMMA, polycarbonate, polysiloxane (PDMS), and/or phosphazene as a comonomer in a poly ethylene oxide (PEO) main chain, and may include one or more thereof.

In the electrolyte of the present invention, the lithium salt is an ionizable lithium salt, which can be expressed as Li⁺X⁻. The anions of the lithium salts are not specifically limited, but may include F⁻, Cl⁻, Br⁻, I⁻, NO₃⁻, N(CN)₂, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, and (CF₃CF₂SO₂)₂N⁻.

The oxide-based solid electrolyte may comprise oxygen (O) and have the ionic conductivity of a metal belonging to Group 1 or 2 of the periodic table. For example, it may include at least one selected from LLTO-based compounds, Li₆La₂CaTa₂O₁₂, Li₆La₂ANb₂O₁₂(wherein A is Ca or Sr), Li₂Nd₃TeSbO₁₂, Li₃BO_{2.5}N_{0.5}, Li₉SiAlO₈, LAGP-based compounds, LATP-based compounds, Li1₊ₓTi₂₋ₓAlₓSi_{y}(PO₄)_{3-y} (wherein 0≤x≤1, and 0≤y≤1), LiAlₓZr₂₋ₓ(PO₄)₃ (wherein 0≤x≤1, and 0≤y≤1), LiTiₓZr₂₋ₓ(PO₄)₃ (wherein 0≤x≤1, and 0≤y≤1), LISICON-based compounds, LIPON-based compounds, perovskite-based compounds, nasicon-based compounds, and LLZO-based compounds.

Furthermore, the conductive material is not particularly limited, as long as it is conductive without causing chemical changes in the battery, but specifically, graphite, carbon-based materials, metal powders or metal fibers, acicular or branched conductive whiskers, conductive metal oxides, conductive polymers, and any one or mixtures thereof may be used. More specifically, graphite, such as natural or artificial graphite; carbon-based materials, such as carbon black, acetylene black, ketjen black, channel black, furnace black, lamp black, summer black, and carbon fiber; metal powders or metal fibers, such as copper, nickel, aluminum, and silver; Conductive whiskers, either acicular or branched, such as zinc oxide whisker, calcium carbonate whisker, titanium dioxide whisker, silicon oxide whisker, silicon carbide whisker, aluminum borate whisker, magnesium borate whisker, potassium titanate whisker, silicon nitride whisker, silicon carbide whisker, and alumina whisker; a conductive metal oxide, such as titanium oxide, or a conductive polymer, such as a polyphenylene derivative, or the like, any one of which or a mixture of two or more of which may be used.

Further, the binder for the positive electrode is any one or a mixture of two or more selected from the group consisting of N,N-bis[3-(triethoxysilyl)propyl]urea, polyethylene oxide (PEO), poly(vinylidene fluoride) (PVDF), and poly(vinylidene fluoride-co-hexafluoropropylene) (PVDF-co-HFP), or any one or a mixture of two or more selected from the group consisting of N,N-bis[3-(triethoxysilyl)propyl]urea, polyethylene oxide (PEO), poly(vinylidene fluoride) (PVDF), poly(vinylidene fluoride-co-hexafluoropropylene) (PVDF-co-HFP), conjugated diene rubber latexes such as acrylonitrile styrene butadiene rubber (SBR), acrylonitrile butadiene rubber (NBR), methacrylate methyl butadiene rubber (MBR), or butadiene rubber (BR), carboxymethylcellulose (CMC), starch, hydroxypropylcellulose, regenerated cellulose, polyvinylpyrrolidone, polytetrafluoroethylene (PTFE), polyethylene, polypropylene, ethylene-propylene-diene terpolymer (EPDM), sulfonated EPDM, styrene-butadiene rubber, fluorinated rubber, and various copolymers.

Furthermore, the negative electrode may have a structure in which a negative electrode composite layer containing a negative electrode active material is formed on the negative electrode current collector.

The negative electrode current collector is not particularly limited as long as it has a high conductivity without causing chemical changes in the battery, and may include, for example, stainless steel, copper, nickel, titanium, calcined carbon, or stainless steel whose surface is treated with carbon, nickel, titanium, or silver.

The negative electrode composite layer may further comprise a negative electrode active material, a conductive material, a binder, and a solid electrolyte, and in some cases, an additive.

In this case, the negative electrode active material may be one selected from the group consisting of lithium metal, lithium alloy, lithium metal complex oxide, lithium-containing titanium complex oxide (LTO), and combinations thereof. Here, the lithium alloy can be an alloy comprising lithium and at least one metal selected from Na, K, Rb, Cs, Fr, Be, Mg, Ca, Sr, Ba, Ra, Al, and Sn. Further, the lithium metal complex oxide may be any one metal (Me) oxide (MeOx) selected from the group consisting of lithium and Si, Sn, Zn, Mg, Cd, Ce, Ni, and Fe, and may be, for example, LiₓFe₂O₃ (wherein 0<x≤1) or LiₓWO₂ (wherein 0<x≤1).

In addition, the negative electrode active material may be a metal complex oxide such as SnₓMe₁₋ₓMe'_{y}O_{z} (wherein Me is Mn, Fe, Pb, or Ge; Me' is Al, B, P, Si, elements of Group 1, 2 or 3 of the periodic table, or halogen; 0<x≤1; 1≤y≤3; and 1≤z≤8); oxides such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄ or Bi₂O₅, and carbon-based negative electrode active materials such as crystalline carbon, amorphous carbon, or carbon composites can be used alone or in combination of two or more.

Furthermore, the conductive material may include, for example, nickel powder, cobalt oxide, titanium oxide, carbon, and the like. The carbon can be any one or more selected from the group consisting of ketjen black, acetylene black, furnace black, graphite, carbon fiber, and fluorene.

Further, the binder for the negative electrode is any one or a mixture of two or more selected from the group consisting of N,N-bis[3-(triethoxysilyl)propyl]urea, polyethylene oxide (PEO), poly(vinylidene fluoride) (PVDF), and poly(vinylidene fluoride-co-hexafluoropropylene)

(PVDF-co-HFP), or any one or a mixture of two or more selected from the group consisting of N,N-bis[3-(triethoxysilyl)propyl]urea, polyethylene oxide (PEO), poly(vinylidene fluoride) (PVDF), poly(vinylidene fluoride-co-hexafluoropropylene) (PVDF-co-HFP), conjugated diene rubber latexes such as styrene butadiene rubber (SBR), acrylonitrile butadiene rubber (NBR), methacrylate methyl butadiene rubber (MBR), or butadiene rubber (BR), carboxymethylcellulose (CMC), starch, hydroxypropylcellulose, regenerated cellulose, polyvinylpyrrolidone, polytetrafluoroethylene, polyethylene, polypropylene, ethylene-propylene-diene terpolymer (EPDM), sulfonated EPDM, styrene-butadiene rubber, fluorinated rubber, and various copolymers.

### Method for Producing Positive Electrode for All-solid-state Battery

In one example of the present disclosure, a method for manufacturing a positive electrode for a secondary battery may comprise (S1) adding a solution containing positive electrode active material particles to a titanium precursor solution to produce a first mixed solution, (S2) adding a lithium source solution comprising nitrogen to the mixed solution to produce a second mixed solution, and (S3) heat treating the second mixed solution to produce a positive electrode active material with a coating layer.

The method for manufacturing a positive electrode for a secondary battery may comprise step (S1) of adding a solution containing positive electrode active material particles to a titanium precursor solution and mixing to prepare a first mixed solution.

Then, in step (S2), a second mixed solution may be prepared by adding a lithium source solution comprising nitrogen to the first mixed solution. In this case, the second mixed solution may form a lithium cobalt oxide coating layer comprising nitrogen on the surface of the positive electrode active material.

Here, the lithium source comprising nitrogen may be, but is not limited to, lithium nitrogen oxide or a lithium or nitrogen ion-containing aqueous solution.

The description of nitrogen above is the same as previously described.

Further, the method of manufacturing a positive electrode for a secondary battery according to the present invention may comprise step (S3) of heat treating the second mixed solution to produce a positive electrode active material in which a coating layer is formed.

In this case, the heat treatment temperature may be 400°C or less, and more specifically, it may be 400°C or less, 350°C or less, 300°C or less, 250°C or less, or 200°C or less. By coating a lithium cobalt oxide coating layer containing nitrogen on the surface of a positive electrode active material, the heat treatment temperature can be significantly reduced compared to conventional methods, thereby improving the economic and operational efficiency of the manufacturing process.

In step (S3) above, the positive electrode active material on which the coating layer is formed may comprise nitrogen in the coating layer even after heat treatment. In other words, it is found that the nitrogen element remains detectable even after heat treatment following its coating onto the core surface.

### [Mode for Practicing the Invention]

Hereinafter, the present disclosure will be described in more detail by examples and experimental examples.

However, the following examples and experimental examples are illustrative of the present invention, and the present disclosure is not limited to these examples.

### Manufacturing Example 1: Preparation of lithium oxide film with nitrogen

A lithium nitrate (LiNO₃) solution was prepared by adding 2 g of lithium nitrate to 100 ml of water (H₂O). A titanium precursor solution was prepared by adding 10.3 g of titanium(IV) propoxide and 2.9 g of acetylacetone to 100 ml of 2-propanol.

To the titanium precursor solution, lithium nitrate solution was slowly added and mixed for 2 hours. It was thinly applied in a petri dish and allowed to dry inside a fume hood for 100 hours. The thin film obtained was heat treated at 200°C for 4 hours to prepare Li₄Ti₅O₁₂ film containing nitrogen (N) element. The elemental molar ratio of nitrogen (N) to titanium (Ti) (N_{N}/N_{Ti}) was found to be 0.83. The elemental molar ratio of nitrogen (N) to titanium (Ti) (N_{N}/N_{Ti}) was measured by ICP-MS analysis.

### Manufacturing Example 2: Preparation of lithium oxide film with nitrogen

A mixed solution of 10 g TiO₂ and 100 ml KOH was added to 50 ml distilled water, and a small amount of acetic acid was added to prepare a TiO₂.nH₂O solution. To the mixed solution, LiOH was added according to the stoichiometric ratio, and NH₃.H₂O was added so that [Li⁺]:[N] = 1:1, and a mixed solution was prepared.

It was thinly applied in a petri dish and allowed to dry inside a fume hood for 100 hours. The thin film obtained was heat treated at 200°C for 72 hours to prepare Li₄Ti₅O₁₂ film containing nitrogen (N) element. The elemental molar ratio of nitrogen (N) to titanium (Ti) (N_{N}/N_{Ti}) was found to be 0.98. The elemental molar ratio of nitrogen (N) to titanium (Ti) (N_{N}/N_{Ti}) was measured by ICP-MS analysis.

### Manufacturing Example 3: Preparation of lithium oxide film with nitrogen

A mixed solution was prepared by adding 1 g of lithium nitrate and 1 g of lithium hydroxide to 100 ml of water (H₂O). A titanium precursor solution was prepared by adding 10.3 g of titanium(IV) propoxide and 2.9 g of acetylacetone to 100 ml of 2-propanol.

The mixed solution was slowly added to the titanium precursor solution and mixed for 2 hours, and then it was thinly applied in a petri dish and dried inside a fume hood for 100 hours. The thin film obtained was heat treated at 200°C for 4 hours to prepare Li₄Ti₅O₁₂ film containing nitrogen (N) element. The elemental molar ratio of nitrogen (N) to titanium (Ti) (N_{N}/N_{Ti}) was found to be 0.39. The elemental molar ratio of nitrogen (N) and titanium (Ti) (N_{N}/N_{Ti}) was measured by ICP-MS analysis.

### Manufacturing Example 4: Preparation of lithium oxide film with nitrogen

A lithium nitrate solution was prepared by adding 6 g of lithium nitrate to 100 ml of water (H₂O). A titanium precursor solution was prepared by adding 10.3 g of titanium(IV) propoxide and 2.9 g of acetylacetone to 100 ml of 2-propanol.

The lithium nitrate solution was slowly added to the titanium precursor solution and mixed for 2 hours, and then it was thinly applied in a petri dish and dried inside a fume hood for 100 hours. The thin film obtained was heat treated at 200°C for 4 hours to prepare Li₄Ti₅O₁₂ film containing nitrogen (N) element. The elemental molar ratio of nitrogen (N) to titanium (Ti) (N_{N}/N_{Ti}) was found to be 2.21.

### Comparative Example 1: Manufacturing a lithium oxide film with no nitrogen

A lithium ethoxide solution was prepared by adding 2 g of lithium ethoxide to 100 ml of 2-propanol. A titanium precursor solution was prepared by adding 13.7 g of titanium(IV) propoxide to 100 ml of 2-propanol.

Lithium ethoxide solution was slowly added to the titanium precursor solution and mixed for 24 hours.

### Experimental Example 1: Measuring ionic conductivity

The ionic conductivity of the lithium oxide films of Manufacturing Examples 1 to 4 and Comparative Example 1 was measured by electrochemical impedance spectroscopy (EIS) in the frequency range of 5.0 mHz to 7.0 MHz with an applied alternating current (AC) voltage of 10 mV by fabricating a symmetrical cell with the configuration of solid electrolyte/ionic conductor/solid electrolyte, and the results are shown in Table 1 below.

**[Table 1]**

| | Ionic conductivity (S/cm) |
|---|---|
| Manufacturing Example 1 | 1.5x10⁻⁷ |
| Manufacturing Example 2 | 1.1x10⁻⁷ |
| Manufacturing Example 3 | 5.9x10⁻⁹ |
| Manufacturing Example 4 | 8.8x10⁻¹⁰ |
| Comparative Example 1 | 2.6x10^{**-**8} |

As shown in Table 1, it was found that the ionic conductivity of Examples 1 and 2 comprising a nitrogen element is significantly higher than that of Comparative Example 1, which does not contain nitrogen. Manufacturing Examples 3 and 4 include nitrogen, but have an excessively high or low elemental molar ratio of nitrogen (N) to titanium (Ti) (N_{N}/N_{Ti}), resulting in poor structural stability and significantly lower ionic conductivity.

### Example 1: Manufacturing of a positive electrode

As the positive electrode active material, 100 g of LiNi_{0.8}Co_{0.1}Mn_{0.1}O₂ with a particle size (D50) of 5 µm was added to 500 ml of 2-propanol and mixed for 2 hours. To the mixed solution, the titanium precursor solution prepared in Manufacturing Example 1 was added and mixed for 2 hours, and then the lithium nitrate solution was slowly added and mixed for 24 hours. The mixed solution was vacuum dried at 60°C followed by heat treatment at 200°C for 4 hours to prepare a positive electrode active material coated with N-containing Li₄Ti₅O₁₂.

81.9% by weight of the prepared positive electrode active material composite, 15.6% by weight of solid electrolyte LPS, 1.5% by weight of carbon black powder, and 1% by weight of PTFE as a binder were mixed using a lab blender (Waring) for 1 min at 5000 rpm without solvent (primary mixing). Next, high shear mixing (using PBV-0.1L, Irie Shokai) was performed by applying a shear force of 100 N to the above mixture (secondary mixing) to prepare a dough. Next, the above dough was used to fabricate an electrode layer with a free-standing structure using a two-roll mill MR-3 (Inoue).

The electrode layer was placed on one side of the aluminum current collector with a thickness of 15 µm and pressurized to produce a positive electrode.

### Comparative Example 2

As the positive electrode active material, 100 g of LiNi_{0.8}Co_{0.1}Mn_{0.1}O₂ with a particle size (D50) of 5 µm was added to 500 ml of 2-propanol and mixed for 2 hours. To the mixed solution, the titanium precursor solution prepared in Comparative Example 1 was added and mixed for 2 hours, and then the lithium ethoxide solution was slowly added and mixed for 24 hours. The mixed solution was vacuum dried at 50°C followed by heat treatment at 400°C for 4 hours to prepare a positive electrode active material coated with Li₄Ti₅O₁₂ containing no nitrogen. The positive electrode was prepared in the same manner as in Example 1 above, except for the method of preparing a positive electrode active material.

### Experimental Example 2: Evaluating all-solid-state battery

An all-solid-state battery containing the positive electrode prepared in Example 1 and Comparative Example 2 was prepared. The all-solid-state battery uses lithium metal with a thickness of 40 µm as the negative electrode, and a solid electrolyte film of Li₆PS₅Cl with a thickness of 50 µm is placed between the positive electrode and the negative electrode manufactured in the above example, and then pressurized at a pressure of 500 MPa, and manufactured in the form of a jig cell having a capacity of 5 mAh with a driving pressure of 3 MPa.

### (1) Evaluating initial discharge capacity and efficiency of all-solid-state battery

It was charged at a C-rate of 0.1C until the voltage reached 4.25V (vs. Li) and then cut-off at a rate of 0.05C while maintaining 4.25V (vs. Li). It was then discharged at a rate (C-rate) of 0.1C until the voltage at discharge was 3.0V (vs. Li) (1^{st} cycle). The initial efficiency was calculated using discharge capacity/charge capacity x 100 (%).

### (2) Evaluating the lifetime characteristics of all-solid-state battery

It was charged at a rate (C-rate) of 0.33C until the voltage reached 4.25V (vs. Li) and then cut-off at a rate of 0.1C while maintaining 4.25V (vs. Li). It was then discharged at a rate (C-rate) of 0.33C until the voltage at discharge was 3.0V (vs. Li). This charge and discharge test was repeated for 50 cycles to measure the capacity retention of the discharge capacity.

(3) The content of each element in the coated positive electrode active material was measured by ICP-MS analysis to determine the content ratio of the coating layer to the active material and the ratio of N and Ti elements.

Table 2 below shows the results of the content of the positive electrode active material surface coating layer, the ratio of N and Ti elements, the initial capacity and initial efficiency at 0.1C, and the capacity retention rate for 50 cycles.

**[Table 2]**

| | Surface coating layer content (% by weight) | Molar ratio of N and Ti | Initial capacity at 0.1C (mAh) | Initial efficiency at 0.1C (%) | Capacity retention at 0.33C for 50 cycles (%) |
|---|---|---|---|---|---|
| Example 1 | 1.1 | 0.83 | 5.0 | 95.0 | 91.1 |
| Comparative Example 2 | 1.0 | - | 5.0 | 95.1 | 82.3 |

As shown in Table 2 above, it was confirmed that the battery of Example 1 in which the ratio (N_{N} /N_{Ti}) of the molar number of the nitrogen element (N_{N}) to the molar number of the Ti element (N_{Ti}) in the coating layer of the positive electrode active material is 2.0 or less has a significantly better capacity retention rate than the battery of Comparative Example 2 for a positive electrode active material that does not contain nitrogen. In other words, it was found that the battery according to Example 1 had improved lifetime characteristics compared to the battery according to Comparative Example 2.

## Claims

1. A positive electrode active material for a secondary battery, comprising a core containing lithium metal oxide; and
a coating layer formed on a surface of the core and comprising an oxide represented by Formula 1 below,
wherein the coating layer comprises nitrogen.
[Formula 1] LiₐM¹_{b}O_{c}
wherein 0<a≤4, 0<b≤5, and 0<c≤12, and
M¹ is at least one selected from B, Al, Zr, P, Ti, Nb and W.

2. The positive electrode active material for a secondary battery according to claim 1, wherein M is Ti, in the oxide represented by Formula 1.

3. The positive electrode active material for a secondary battery according to claim 1,
wherein the nitrogen is derived from nitrogen oxide or nitrogen ion-containing aqueous solution.

4. The positive electrode active material for a secondary battery according to claim 1,
wherein the nitrogen is comprised in at least one form selected from NO₂, NO₃⁻, N₂O, N₂O₃, N₂O₄, N₂O₅, N₃O₇ and NH₄OH.

5. The positive electrode active material for a secondary battery according to claim 1,
wherein the ratio (N_{N}/N_{Ti}) of the molar number of the nitrogen element (N_{N}) to the molar number of the Ti element (N_{Ti}) in the coating layer of 0.5 to 2.0.

6. The positive electrode active material for a secondary battery according to claim 5,
wherein the ratio (N_{N}/N_{Ti}) of the molar number of the nitrogen element (N_{N}) to the molar number of the Ti element (N_{Ti}) in the coating layer of 0.6 to 1.0.

7. The positive electrode active material for a secondary battery according to claim 1,
wherein the coating layer is comprised in an amount of 0.1% by weight to 5.0% by weight based on the total weight of the positive electrode active material.

8. The positive electrode active material for a secondary battery according to claim 1,
wherein the lithium metal oxide is represented by Formula 2 below.
[Formula 2] Liₓ[Ni_{y}Co_{z}Mn_{w}M²ᵥ]O₂
wherein M² is at least one element selected from W, Cu, Fe, V, Cr, Ti, Zr, Zn, Al, In, Ta, Y, La, Sr, Ga, Sc, Gd, Sm, Ca, Ce, Nb, Mg, B and Mo,
x, y, z, w, and v are 1.0≤x≤1.30, 0.1≤y<1, 0≤z≤1, 0≤w≤1, and 0≤v≤0.1, respectively, and y+z+w+v=1.

9. A positive electrode for an all-solid-state battery comprising a positive electrode active material according to any one of claims 1 to 8, a solid electrolyte, a conductive material, and a binder.

10. A method of manufacturing a positive electrode for a secondary battery, comprising:
(S1) adding a solution containing positive electrode active material particles to a titanium precursor solution to prepare a first mixed solution;
(S2) adding a lithium source solution comprising nitrogen to the first mixed solution to prepare a second mixed solution; and
(S3) heat treating the second mixed solution to produce a positive electrode active material in which a coating layer is formed.

11. The method of manufacturing a positive electrode for a secondary battery according to claim 10,
wherein in (S3), a heat treatment temperature is 400°C or less.

12. The method of manufacturing a positive electrode for a secondary battery according to claim 10,
wherein in (S3), the coating layer comprises nitrogen.

13. An all-solid-state battery, comprising a positive electrode according to claim 9;
a negative electrode; and
a solid electrolyte disposed between the positive electrode and negative electrode.
